# EUROPÄISCHE PATENTSCHRIFT

(11) **EP 1 990 785 B1**
(45) Veröffentlichungstag und Bekanntmachung des Hinweises auf die Patenterteilung: **08.08.2018**
(21) Anmeldenummer: 08008076.5
(22) Anmeldetag: 26.04.2008
(51) Int. Cl.: G08C 19/02, G05B 19/042, G05B 19/418

(54) **Parametrierungsüberwachung für analoge Signalbaugruppen**
Parameter supervision for analogue signal components
Surveillance de paramétrage pour composants de signal analogique

(30) Priorität: 11.05.2007 DE 102007022631
(43) Veröffentlichungstag der Anmeldung: 12.11.2008
(73) Patentinhaber: Phoenix Contact GmbH & Co. KG, 32825 Blomberg (DE)
(72) Erfinder: Brand, Klaus, 32108 Bad Salzuflen (DE); Grewe, Stephan, 32657 Lemgo (DE); Lohre, Hubertus, 32839 Steinheim (DE)
(74) Vertreter: Bill, Burkart Hartmut

(56) Entgegenhaltungen:
- EP-A2- 1 643 648
- DE-A1- 10 357 797
- US-A- 6 141 193

## Beschreibung

Die Erfindung betrifft ein Verfahren zum Überwachen eines parametrierbaren Ausgangstreibers, der zur Ansteuerung von Aktoren in der industriellen Automatisierungstechnik geeignet ist, beim Einprägen von analogen Signalen an einem Ausgabekanal, sowie eine zur Ansteuerung von Aktoren in der industriellen Automatisierungstechnik geeignet Analogsignal-Ausgabevorrichtung, insbesondere zur Durchführung eines Verfahrens.

In der industriellen Automatisierungstechnik werden zur Ansteuerung von Aktoren häufig analoge Signale benutzt, die durch eine Analogsignal-Ausgabevorrichtung an einem Ausgabekanal bereitgestellt werden, an welchen der Aktor als externe Last angeschaltet ist. Die Analogsignal-Ausgabevorrichtung kann hierbei einen oder eine Vielzahl von Ausgabekanälen besitzen. Die zur Ansteuerung bereitgestellten analogen Signale unterteilen sich im Wesentlichen in Stromausgabesignale und/oder in Spannungsausgabesignale. Die Stromausgabesignale bewegen sich hierbei üblicherweise in einem Bereich bis um 20 mA herum, gegebenenfalls auch höher, und die

Spannungsausgabesignale in einem Bereich bis um 10V herum, gegebenenfalls auch höher. Bei einem am Ausgabekanal bereitgestellten Stromsignal kann aufgrund eines meist sehr weit abzudeckenden Bürdenbereichs, z.B. zwischen 0... 550Ω und der Tatsache, dass meist wechselnd hohe und geringe Lasten betrieben werden müssen, eine hohe Verlustleistung am Treiberausgang der Analogausgabestufe entstehen. Dies ist insbesondere der Fall, wenn zur Bereitstellung erwünschter oder notwendiger Stromausgabesignale sehr niederimpedante Lasten innerhalb der Analogsignal-Ausgabevorrichtung betrieben werden müssen.

Je nach Wärmeabfuhr des verwendeten Elektronik-Gehäuses der Analogsignal-Ausgabevorrichtung, kann somit in Folge ein sog. Derating oder eine Limitierung der Anzahl der Stromausgabekanäle eintreten.

Hersteller von Signalausgabebaugruppen zur Ansteuerung von Aktoren schreiben dem Anwender daher häufig für analoge Stromausgänge bei bestimmten Baugruppen eine geringe, von extern anzuschaltende, Maximalbürde vor, um die maximale Leistung in der Analogsignal-Ausgabevorrichtung zu begrenzen oder schreiben dem Anwender die Vorauswahl eines vorgegebenen Bürdenbereiches vor, z.B. zw. 0 und 300Ω oder zw. 300 und 600Ω.

Um auf eine externe Bürdenbeschränkung zu verzichten, gibt es prinzipiell die Möglichkeit eine lastabhängige Nachführung der Versorgungsspannung an der Analogsignal-Ausgabevorrichtung bzw. den Ausgangstreibern der Analogsignal-Ausgabevorrichtung durchzuführen.

Das US-Patent 6,141,193 beschreibt eine Schaltungseinrichtung mit der die Spannung an einer Last mit einem Nebenschlussspannungsregler geregelt wird. Nebenschlussregler und Last sind parallel geschaltet in einer intergierten Schaltung implementiert, wobei die Schaltung durch eine externe Versorgungseinrichtung mit Spannung versorgt wird. Eine Überlastung des Nebenschlussreglers beim Ausregeln von Spannungsschwankungen wird durch eine Überlasterkennung verhindert, mit der die Strom- bzw. Leistungsaufnahme überwacht wird. Überschreitet diese Leistung einen definierten Grenzwert, so wird ein durch die Überlasterkennung steuerbarer Schutzschalter geöffnet, so dass der Stromfluss durch die Parallelschaltung unterbunden wird.

Die EP 1 643 648 A2 beschreibt ein Verfahren und eine Vorrichtung zur Erzeugung eines Stromkreisantriebssignals basierend auf einer Vergleichsspannung, die an eine Last angepasst wird.

Die DE 103 57 797 A1 beschreibt eine Peripherieeinheit für ein redundantes Steuersystem, der Steuerdaten zuführbar sind, welche einen Soll-Ausgangsstrom zum Ansteuern einer induktiven Last repräsentieren, wobei durch die Peripherieeinheit der induktiven Last über einen Ausgang der Pripherieeinheit und über eine Leitung ein Ist-Ausgangsstrom zuführbar ist, wobei die Peripherieeinheit den Ist-Ausgangsstrom erfasst und mit dem Soll-Ausgangsstrom vergleicht.

Der Erfindung liegt als eine Aufgabe zugrunde, einen anderen, neuen und gegenüber dem aufgezeigten Stand der Technik wesentlich verbesserten Weg aufzuzeigen, der den Verzicht auf externe Bürdenbeschränkung bei gleichzeitiger hoher Flexibilität einer solchen Signalausgabebaugruppe ermöglicht.

Die erfindungsgemäße Lösung der Aufgabe ist überraschend durch einen Gegenstand mit den Merkmalen nach einem der anhängenden unabhängigen Ansprüchen gegeben.

Vorteilhafte und/oder bevorzugte Ausführungsformen und Weiterbildungen sind Gegenstand der Unteransprüche.

Die Erfindung sieht folglich ein Verfahren zum Überwachen eines parametrierbaren Ausgangstreibers, der zur Ansteuerung von Aktoren in der industriellen Automatisierungstechnik geeignet ist, beim Einprägen von analogen Signalen an einem Ausgabekanal vor, wobei die auf den zur Parametrierung des Ausgangstreibers vorgegebenen Parametrierungsdaten basierende resultierende, interne Verlustleistung ermittelt und gegenüber einem Verlustleistungs-Grenzwert verglichen wird, und wobei in funktioneller Abhängigkeit des Vergleichsergebnisses ein auf den Parametrierungsdaten basierendes entsprechendes Einprägen eines analogen Signals am Ausgabekanal unterbunden wird.

Erfindungsgemäß wird ferner bei Unterbindung ein Fehlersignal generiert.

In zweckmäßiger Weiterbildung ist ferner vorgesehen, bei Unterbindung das Einprägen eines auf anderen Parametrierungsdaten basierenden Signals freizugeben.

Von Vorteil ist ferner, in funktioneller Abhängigkeit des Vergleichsergebnisses ein Freigabesignal zum entsprechenden Einprägen zu generieren.

Zur weiteren Erhöhung der Sicherheit, wird dieses Freigabesignal mit einem zweiten Freigabesignal, welches zum Bewirken eines einzuprägenden Signals von einem die Parametrierungsdaten vorgebenden Steuer- und/oder Automatisierungssystem empfangen wird, zum Freigeben des Einprägens kombiniert.

Die Erfindung sieht als weitere Lösung ferner eine Analogsignal-Ausgabevorrichtung, die zur Ansteuerung von Aktoren in der industriellen Automatisierungstechnik geeignet ist, vor, insbesondere zur Durchführung eines zuvor beschriebenen Verfahrens, wobei die Vorrichtung wenigstens einen Ausgangstreiber umfasst, der zum Einprägen von analogen Signalen an einem Ausgabekanal parametrierbar ist, und
eine Überwachungseinrichtung umfasst, die angepasst ist, basierend auf zur Parametrierung des Ausgangstreibers vorgegebenen Parametrierungsdaten eine resultierende, interne Verlustleistung zu ermitteln und diese gegenüber einem Verlustleistung-Grenzwert zu vergleichen, sowie das auf den Parametrierungsdaten basierende entsprechende Einprägen eines analogen Signals am Ausgabekanal in funktioneller Abhängigkeit des Vergleichsergebnisses zu unterbinden.

Bei einer besonders bevorzugten Analogsignal-Ausgabevorrichtung nach der Erfindung sind am Ausgabekanal einzuprägende Strom- und/oder Spannungssignale parametrierbar.

Gemäß einer praktischen Ausführung ist die Analogsignal-Ausgabevorrichtung Teil eines übergeordneten Steuerungs- oder Automatisierungssystems, über welches die Parametrierungsdaten vorgebbar sind.

Von Vorteil ist ferner, wenn die Überwachungseinrichtung bei Unterbindung ein Fehlersignal für das Steuer- oder Automatisierungssystem generiert.

Für eine umfangreiche Flexibilität ist die Überwachungseinrichtung ferner angepasst, bei einem Unterbinden des Einprägens eines Stromsignals das Einprägen eines auf anderen Parametrierungsdaten basierenden Signals freizugeben.

Zum Sicherstellen einer expliziten Freigabe, ist die Überwachungseinrichtung ferner angepasst, in funktioneller Abhängigkeit des Vergleichsergebnisses ein Freigabesignal zum entsprechenden Einprägen zu generieren.

Zur weiteren Erhöhung der Freigabesicherheit, umfasst die Analogsignal-Ausgabevorrichtung zweckmäßig eine Freigabeeinheit, die angepasst ist, die Freigabe zur Einprägung eines Signals nur in Abhängigkeit eines ersten Freigabesignals von dem Steuer- und/oder Automatisierungssystem zum Bewirken eines einer Parametrierungsvorgabe entsprechend einzuprägenden Signals und eines zweiten Freigabesignals von der Überwachungseinrichtung zu bewirken.

Analogsignal-Ausgabevorrichtungen nach der Erfindung besitzen eine Vielzahl von Ausgabekanälen, mit wenigstens einem Ausgangstreiber zum jeweiligen Einprägen von analogen Stromsignalen oder Spannungssignalen.

In zweckmäßiger Weise kann die Analogsignal-Ausgabevorrichtung anwendungsspezifisch aufgebaut sein und z.B. ein separates Analogausgabegerät mit lokaler Intelligenz sein, eine Kombination von intelligenter Steuerung mit angekoppelter Analogausgabebaugruppe sein oder eine multifunktionale E/A-Baugruppe zum Empfangen von analogen Strom- und/oder Spannungssignalen und zum Ausgeben von analogen Stromsignalen und Spannungssignalen.

Ein Wesentlicher Kern der Erfindung liegt folglich darin, eine intelligente Parametrierungsüberwachung, nachfolgend auch kurz als IPÜ bezeichnet, vor dem Einprägen eines Ausgabesignals durchzuführen. Es werden universelle, analoge Strom- und Spannungsausgangsstufen eingesetzt, wobei mit Hilfe der intelligenten Parametrierungsüberwachung, die z.B. in einer analogen Analogausgabebaugruppe integriert ist, die Parametrierung der analogen Ausgangsstufen überwacht wird. In Folge der Überwachung wird die Parametrierung nur einer max. zul. Anzahl an Ausgangsstufen zur Bereitstellung von Stromausgabesignalen freigegeben. Andere Kanale können dann noch gegebenenfalls als Spannungsausgang betrieben werden. Vorteile sind insbesondere, dass zum Einen auf eine externe Bürdenbeschränkung verzichtet werden kann und zum Anderen sichergestellt ist, dass es zu keinen unzulässigen Verlustleistungsüberhöhungen innerhalb der Baugruppe kommt Zudem sichert die Erfindung eine hohe Flexibilität der analogen Ausgangsstufen, da prinzipiell alle analogen Strom- und Spannungsausgabesignale an jedem Ausgang generiert werden können. Die IPÜ arbeitet im Wesentlichen nach einem Freigabemechanismus, gemäß welchem der Parametrierung eines analogen Ausgabekanals nur dann statt gegeben wird, wenn die max. zulässige Verlustleistungsgrenze in der Analogsignal-Ausgabevorrichtung nicht überschritten wird. Wenn basierend auf den Parametrierungsdaten diese Verlustleistungsgrenze nicht eingehalten werden kann, dann unterbindet die IPÜ die Freigabe des analogen Ausgabekanals und generiert eine entsprechende Fehlermeldung, z.B., dass die max. zulässige Verlustleistungsgrenze überschritten wird und weitere Kanale nur noch im Spannungsausgabemodus parametriert werden können. Die Fehlermeldung wird an ein Steuerungssystem oder das Steuerungssystem oder das Automatisierungssystem, welches die Parametrierungsdaten vorgegeben hat, zurückgemeldet, so dass unter Berücksichtigung der Fehlermeldung erneut alternative Parametrierungsdaten generiert werden können. Mit der Erfindung können folglich die Ausgabekanäle z.B. einer analogen Achtkanal-Ausgabebaugruppe unterschiedlich parametriert werden. Dies kann z.B. eine Parametrierung sein, die acht Spannungsausgaben oder vier Stromausgaben und vier Spannungsausgaben bereitstellt. Die IPÜ überwacht bevorzugt nicht nur die Parametrierung selbst, sondern erteilt auch ein Freigabesignal, welches mit einem Freigabesignal des Steuerungssystems bzw. Automatisierungssystems logisch verknüpft wird, z.B. durch eine logische "UND"-Verknüpfung. Daraus kann auf einfache Weise ein höchst sicheres Freigabesignal für den analogen Ausgangstreiber generiert werden.

Weitere Merkmale und Vorteile der Erfindung werden nachfolgend anhand der Beschreibung eines bevorzugten Ausführungsbeispiels unter Berücksichtigung der beigefügten Zeichnungen ersichtlicht.

In den Zeichnungen zeigen:
- Fig. 1: eine allgemeine Prinzipskizze einer erfindungsgemäßen Analogsignal-Ausgabevorrichtung,
- Fig. 2: eine Prinzipskizze der erfindungsgemäßen Analogsignal-Ausgabevorrichtung aus Fig. 1 mit einer schematisch angezeigten Verarbeitungskette zur individuellen Freigabe einer Vielzahl von Ausgabekanälen, und
- Fig. 3: ein Ablaufdiagramm betreffend eine bevorzugte Ausführung zur Überwachung von zur Ansteuerung von Aktoren geeigneten, an einem oder mehreren Ausgabekanälen eingeprägten analogen Signalen.

Nachfolgend wird eine bevorzugte jedoch lediglich beispielhafte Ausführungsform der Erfindung beschrieben.

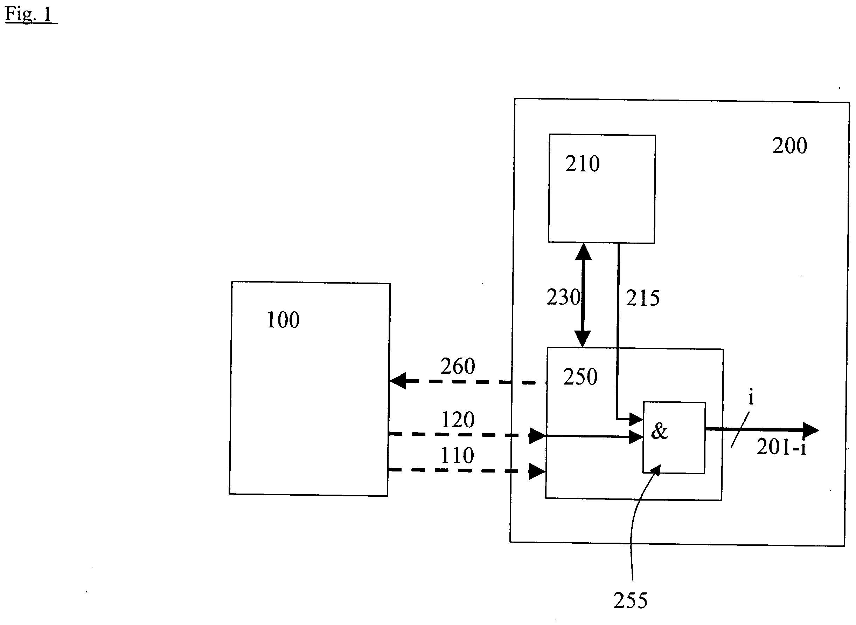

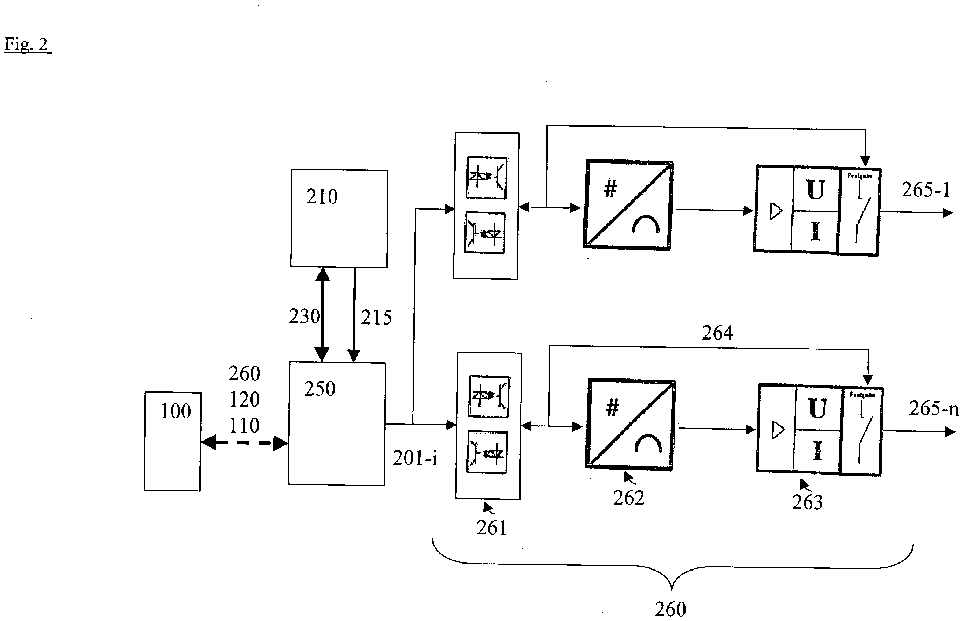

Den Fign. 1 und 2 ist eine allgemeine Prinzipskizze einer erfindungsgemäßen Analogsignal-Ausgabevorrichtung 200 mit einem vorgeschalteten oder übergeordneten Steuerungs- oder Automatisierungssystem 100 bzw. eine erweiterte Prinzipskizze der erfindungsgemäßen Signalausgabebaugruppe 200 aus Fig. 1 mit einer Verarbeitungskette 260 zur individuellen Ansteuerung und Freigabe einer Vielzahl n von Ausgabekanälen 265-1, 265-n.

Die dargestellte Analogsignal-Ausgabevorrichtung 200 ist mit dem Steuerungs- oder Automatisierungssystem 100 über einen oder mehrere Kommunikationskanäle zum Austausch von Daten, z.B. in Form von Telegrammen, verbunden und bildet somit quasi einen Teil des Steuerungs- oder Automatisierungssystem 100. Die Analogsignal-Ausgabevorrichtung umfasst eine Steuereinheit 250, z.B. in Art eines Mikrocontrollers sowie eine mit der Steuereinheit 250 in Verbindung stehende Einrichtung 210 zur intelligenten Parametrierungsüberwachung. Die Steuereinheit 250 der Signalausgabebaugruppe 200 steht ferner mit einer Verarbeitungskette 260 in Verbindung, die mit einer Anzahl n von Ausgabekanälen 265-1, 265-n verbunden ist. Im vorliegenden Fallbeispiel, weist die Verarbeitungskette 260 für jeden Ausgabekanal 265-i, mit i = 1 ... n, zunächst eine mit der Steuereinheit verbundene Ankopplungseinrichtung 261, insbesondere in Art eines Signaltrenners, wie z.B. eines Optokopplers, eines kapazitiven, magnetoresistiven oder induktiven Signaltrenners, zur galvanischen Trennung der dieser Ankopplungseinrichtung vorgeschalteten und der dieser Ankopplungseinrichtung nachgeschalteten Einrichtungen, so dass eine Schädigung oder Signalverfälschung aufgrund gegenseitiger Beeinflussung zwischen den vorgeschalteten und den nachgeschalteten Einrichtungen im Wesentlichen ausgeschlossen ist. Im Fallbeispiel sind die von der Steuereinheit 250 an die Verarbeitungskette 260 übertragenen Signale digitale Signale und werden von der bzw. den Ankopplungseinrichtung(en) 261 wiederum in digitale Signale umgesetzt. Jeder Ankopplungseinrichtung 261 in Reihe nachgeschaltet ist somit ein Digital-/Analogwandler 262 und ein analoger Ausgangstreiber 263. Die Ausgangstreiber 263 sind bevorzugt zum optionalen Einprägen von Stromsignalen und von Spannungssignalen parametrierbar. Die Parametrierung an und für sich kann grundsätzlich auf jede für den Fachmann bekannte Weise erfolgen, so dass eine hierfür notwendige Verschaltung aus Gründen der Übersichtlichkeit nicht näher dargestellt ist. Der von der jeweiligen Ankopplungseinrichtung 261 zum Digital-/Analogwandler 262 führende Signalpfad ist ferner abgezweigt und parallel an eine im Ausgangstreiber integrierte Freigabeschalteinrichtung gelegt.

Das System 100 übermittelt über einen Kommunikationskanal bestimmte, üblicherweise applikationsspezifische Parametrierungsdaten 110 zur Parametrierung eines Ausgangstreibers eines Ausgabekanals oder mehrerer Ausgabekanäle an die Analogsignal-Ausgabevorrichtung 200 und insbesondere an die Steuereinheit 250, welche grundsätzlich die weitere Parametrierung durchführt. Solche, für die Analogsignal-Ausgabevorrichtung 200 über das System 100 vorgegebenen Parametrierungsdaten 110 definieren z.B. den über einen Ausgangstreiber zu parametrierenden Ausgabekanal, einschließlich der Vorgaben, ob dieser zur Stromausgabe oder zur Spannungsausgabe betrieben werden soll und in welchen Strom- bzw. Spannungsbereichen und Bürdenbereichen gearbeitet werden soll.

Ferner wird ein Freigabesignal 120 an die Analogsignal-Ausgabevorrichtung 200 und insbesondere an die Steuereinheit 250 übermittelt, um aus Sicht des Systems 100 einen oder mehrere bestimmte Ausgabekanäle entsprechend der vorgegebenen Parametrierung freizugeben das ein entsprechendes Einprägen einer Signalausgabe zu bewirken.

Das von dem System 100 kommende Freigabesignal 120 wird an eine Logikkomponente 255 der Steuereinheit 250 geleitet, die ein entsprechendes Freigabesignal 201-i zur Freigabe der gewünschten Parametrierung für den oder die von dem System 100 bestimmten Ausgabekanäle an die nachfolgende Verarbeitungskette 260 bevorzugt nur dann ausgibt, wenn auch von der Einrichtung 210 zur intelligenten Parametrierungsüberwachung, wie nachfolgend beschrieben, ein entsprechendes Freigabesignal 215 vorliegt. Die Ansteuerung der den jeweiligen Ausgabekanälen zugeordneten Ausgangstreiber mittels eines solchen Freigabesignals oder mehrerer solcher Freigabesignals 201-i erfolgt dann z.B. seriell.

In jedem Fall vor Ausgabe eines solchen Freigabesignals 201-i durch die Steuereinheit 250, übergibt die Steuereinheit 250 die vom System 100 erhaltenen Parametrierungsdaten 110 zunächst über einen Kommunikationskanal 230 an die Einrichtung 210 zur intelligenten Parametrierungsüberwachung. Diese prüft daraufhin, ob bei einer entsprechenden Parametrierung für den oder die Ausgabekanäle eine max. zulässige Verlustleistungsgrenze nicht überschritten wird. Ergibt die Prüfung, dass bei der entsprechenden Parametrierung des oder der Ausgabekanäle die max. zulässige Verlustleistungsgrenze überschritten wird, gibt die Einrichtung 210 zur intelligenten Parametrierungsüberwachung über den Kommunikationskanal 230 ein Fehlersignal zurück, welches zweckmäßig auch an das System 100 rückübertragen wird, wie mit der Bezugsziffer 260 angezeigt.

Ergibt die Prüfung, dass bei der entsprechenden Parametrierung des oder der Ausgabekanäle die max. zulässige Verlustleistungsgrenze nicht überschritten wird, gibt die Einrichtung 210 zur intelligenten Parametrierungsüberwachung ein Freigabesignal 215 an die Steuereinheit 250, welches an die Logikkomponente 255 der Steuereinheit 250 geleitet wird.

In diesem Fall liegen somit, basierend auf und zugeordnet zu bestimmten Parametrierungsdaten 120, von dem System 100 kommend das Freigabesignal 120 und von der Einrichtung 210 kommend das Freigabesignal 215 an. Durch eine einfache logische "UND-Verknüpfung" kann folglich sichergestellt werden, dass nur in diesem Fall auch von der Logikkomponente 255 ein entsprechendes Freigabesignal 201-i zur Freigabe der vorgegebenen Parametrierung zum Einprägen eines entsprechenden analogen Signals an dem oder den bestimmten Ausgabekanälen an die nachfolgende Verarbeitungskette 260 ausgegeben wird.

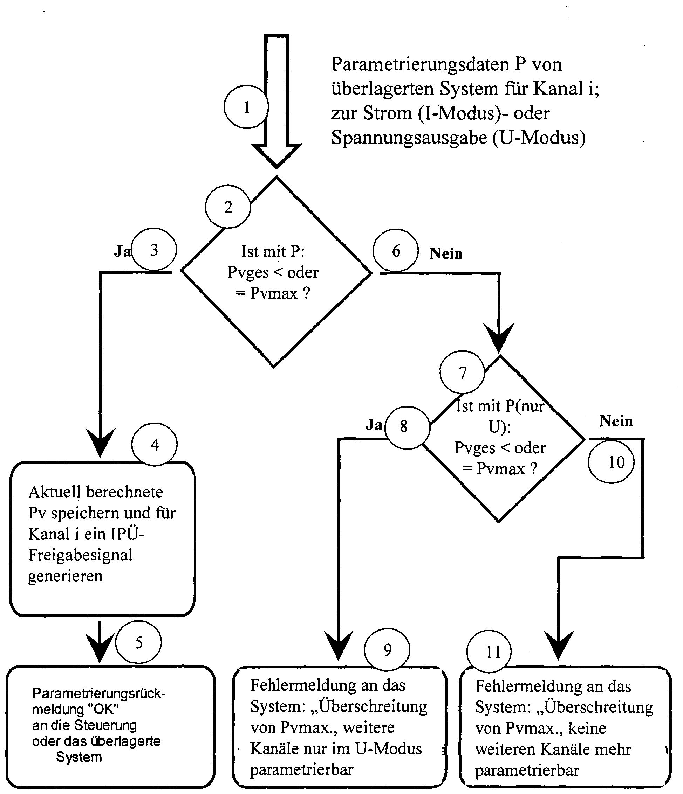

Fig. 3 zeigt ein Ablaufdiagramm betreffend eine bevorzugte Ausführung eines Ablaufs einer intelligenten Parametrierungsüberwachung zum Überwachen eines parametrierbaren Ausgangstreibers, der zur Ansteuerung von Aktoren in der industriellen Automatisierungstechnik geeignet ist, beim Einprägen von analogen Signalen an einem Ausgabekanal.

Gemäß Fig. 3, werden in einem ersten Schritt 1 Parametrierungsdaten P für eine Parametrierungsanforderung eines Systems 100 betreffend einen oder mehrere Ausgabekanäle i in Bezug auf eine jeweils gewünschte Stromausgabe (I-Modus) oder Spannungsausgabe (U-Modus) an die intelligente Parametrierungsüberwachung übertragen.

Anhand den Parametrierungsdaten ermittelt die intelligente Parametrierungsüberwachung die Leistung "Pvges", die in dem betroffenen Gerät, also insbesondere in der Analogsignal-Ausgabevorrichtung insgesamt und/oder in dem/den Ausgangstreiber/n bei Umsetzung der Parameteranforderung praktisch entsteht. Diese ermittelte bzw. berechnete Leistung wird anschließend in einem nächsten Schritt 2 gegenüber einem vorgegebenen Leistungsschwellwert "Pvmax" verglichen und angenommen, dass alle ermittelten Leistungsanteile die oberhalb des Schwellwertes liegen, eine unzulässige Verlustleistung darstellen.

Anhand der gesamten Parametrierungsdaten P sowie gegebenenfalls bereits parametrierter Ausgangstreiber und entsprechend freigegebener Ausgabekanäle ist die intelligente Parametrierungsüberwachung in Kenntnis, welcher Strom und/oder welche Spannung an welchen Ausgabekanälen bereits eingeprägt oder noch einzuprägen sind, in welchem Messbereich gearbeitet werden soll, welche internen Bürden betrieben werden oder noch betrieben werden müssen. Entsprechend kann bereits vor einer tatsächlichen neuen Parametrierung und Freigabe zum Einprägen von Signalen an den Ausgabekanäle bereits ermittelt werden, ob betroffene Geräte überlastet werden würden.

Ergibt die Überprüfung 2 in einem Schritt 3, dass die ermittelte Leistung noch unterhalb des Schwellwertes liegt, wird in einem nachfolgenden Schritt 4 die aktuelle ermittelte bzw. berechnete Leistung gespeichert und für die entsprechend zu parametrierenden Ausgabekanäle ein IPÜ-Freigabesignal generiert und anschließend eine entsprechende OK-Rückmeldung, bei Fig. 3 mit dem Bezugszeichen 4 belegt, an das System 100 übertragen.

Ergibt die Überprüfung 2 dahingegen in einem Schritt 6, dass die ermittelte Leistung nicht mehr unterhalb des Schwellwertes liegt, und also das betroffene Gerät überlastet werden würde, wird in einem nachfolgenden Schritt 7 bevorzugt noch geprüft, ob bei einer Parametrierung der Ausgangstreiber zum Betreiben der Ausgabekanäle nur als Spannungsausgabekanäle die Leistung noch innerhalb des maximalen Verlustleistungsrahmens liegen würde. Dies kann anwendungsspezifisch durchaus gegeben sein, da Spannungsausgänge den Vorteil bieten, das dort im Wesentlichen kein Strom fließt und somit zumindest am Treiberausgang keine Leistung umgesetzt wird. Führt diese Überprüfung 7 zum Ergebnis 8, dass Ausgabekanäle noch als Spannungsausgänge betrieben und entsprechend freigegeben werden dürfen, wird in einem nachfolgenden Schritt 9 eine Fehlermeldung für das System 100 generiert, welche anzeigt, dass bei geprüfter Parametrierung eine Überschreitung der max. Verlustleistung eintritt, weitere Kanäle jedoch noch für einen Spannungsmodus parametrierbar sind.

Führt diese Überprüfung 7 zum Ergebnis 10, dass die Verlustleistungsgrenze in jedem Fall überschritten wird, wird in einem nachfolgenden Schritt 11 eine Fehlermeldung für das System 100 generiert, welche anzeigt, dass bei geprüfter Parametrierung eine Überschreitung der max. Verlustleistung in jedem Fall eintritt und keine weitere Kanäle mehr parametrierbar sind, weder im Strommodus noch im Spannungsmodus.

Die Verlustleistung wird hierbei für das betroffene Gerät, also im vorliegen Fall gemäß Fign. 1 und 2 für die Analogsignal-Ausgabevorrichtung insgesamt betrachtet. Die Ermittlung der tatsächlich anfallenden Leistung wird zweckmäßig für jeden Kanal einzeln durchgeführt, weil für einen Anwender über das System 100, im Wesentlichen unabhängig von der Art des Systems, üblicherweise ein Parametrierungstool nutzt, über welches die ganzen Optionen, wie das Gerät einzustellen ist, auswählbar sind und somit jeder Ausgabekanal einzeln einstellbar ist. Folglich kann für jeden Kanal grundsätzlich individuell entschieden werden, ob dieser ein Stromausgabekanal oder ein Spannungsausgabekanal sein soll, welcher Messbereich abdeckt sein soll, welchen Wirkbereich er haben soll. Anhand der vorgegebenen Kombinationen im Parametrierungstelegramm kann somit mittels der intelligenten Parametrierungsüberwachung dann berechnet werden, ob das Gerät überlastet wird oder nicht und anhand dessen kann eine Rückmeldung generiert und rückgegeben werden.

Anforderungen in analogen Ausgabebaugruppen sowohl Stromausgange, als auch eine große Kanalzahl an Spannungsausgängen umzusetzen, können folglich jetzt mit der Erfindung auf einfachste Weise realisiert werden, sodass die Erfindung somit die bisher notwendige Variantenzahl von analogen Ausgabebaugruppen bei max. Flexibilität reduziert. Eine vorherige Berücksichtigung, welche Bürde extern vorliegt oder vorliegen darf, ist somit nicht mehr zwingend notwendig.

## Patentansprüche

1. Verfahren zum Überwachen eines parametrierbaren Ausgangstreibers (263) einer Analogsignal-Ausgabevorrichtung (200), der zur Ansteuerung von Aktoren in der industriellen Automatisierungstechnik geeignet ist, beim Einprägen von analogen Signalen an einem Ausgabekanal (265-1, 265-n), mit folgenden Schritten:
Ermitteln einer auf den zur Parametrierung des Ausgangstreibers (263) vorgegebenen Parametrierungsdaten (110) basierenden resultierenden, internen Verlustleistung (Pvges), Vergleichen der internen Verlustleistung (Pvges) gegenüber einem Verlustleistungs-Grenzwert (Pvmax) der Analogsignal-Ausgabevorrichtung (200), und in funktioneller Abhängigkeit des Vergleichsergebnisses Unterbinden eines den zur Parametrierung des Ausgangstreibers (263) vorgegebenen Parametrierungsdaten (110) entsprechenden Einprägens eines analogen Signals am Ausgabekanal (265-1, 265-n),
wobei die Analogsignal-Ausgabevorrichtung (200) Teil eines übergeordneten Steuerungs- oder Automatisierungssystems (100) ist, über welches die Parametrierungsdaten (110) vorgebbar sind,
**dadurch gekennzeichnet, dass**
die Analogsignal-Ausgabevorrichtung (200) universelle, analoge Strom- und Spannungsausgangsstufen und eine Vielzahl von Ausgabekanälen umfasst, mit wenigstens einem Ausgangstreiber (263) zum jeweiligen Einprägen von analogen Stromsignalen oder Spannungssignalen, vor dem Einprägen eine Ausgabesignals eine intelligente Parametrierungsüberwachung durchgeführt wird, in deren Folge die Parametrierung nur einer maximal zulässigen Anzahl an Ausgangsstufen zur Bereitstellung von Stromausgabesignalen freigegeben wird, wobei andere Kanäle gegebenenfalls noch als Spannungsausgang betrieben werden können, wobei, wenn basierend auf den Parametrierungsdaten (110) der Verlustleistungs-Grenzwert (Pvmax) nicht eingehalten wird, die intelligente Parametrierungsüberwachung die Freigabe des analogen Ausgabekanals (265-1, 265-n) unterbindet und eine entsprechende Fehlermeldung generiert, dass der maximal zulässige Verlustleistungs-Grenzwert (Pvmax) überschritten wird und weitere Kanäle nur noch im Spannungsausgabemodus parametriert werden können.

2. Verfahren nach einem der vorstehenden Ansprüche, wobei bei Unterbindung das Einprägen eines auf anderen Parametrierungsdaten (110) basierenden Signals freigegeben wird.

3. Verfahren nach einem der vorstehenden Ansprüche, wobei in funktioneller Abhängigkeit des Vergleichsergebnisses ein Freigabesignal (215) zum entsprechenden Einprägen generiert wird.

4. Verfahren nach vorstehendem Anspruch, wobei das Freigabesignal (215) mit einem zweiten Freigabesignal (120), welches zum Bewirken eines einzuprägenden Signals von dem die Parametrierungsdaten (110) vorgebenden Steuer- und/oder Automatisierungssystem (100) empfangen wird, zum Freigeben des Einprägens kombiniert wird.

5. Analogsignal-Ausgabevorrichtung (200) geeignet zur Ansteuerung von Aktoren in der industriellen Automatisierungstechnik, insbesondere zur Durchführung eines Verfahrens nach einem der vorstehenden Ansprüche, umfassend
wenigstens einen Ausgangstreiber (263), der zum Einprägen von analogen Signalen an einem Ausgabekanal (265-1, 265-n) parametrierbar ist, und eine Überwachungseinrichtung angepasst, basierend auf zur Parametrierung des Ausgangstreibers (263) vorgegebenen Parametrierungsdaten (110) eine resultierende, interne Verlustleistung (Pvges) zu ermitteln und diese gegenüber einem Verlustleistungs-Grenzwert (Pvmax) der Analogsignal-Ausgabevorrichtung (200) zu vergleichen, sowie das auf den Parametrierungsdaten (110) basierende entsprechende Einprägen eines analogen Signals am Ausgabekanal (265-1, 265-n) in funktioneller Abhängigkeit des Vergleichsergebnisses zu unterbinden, wobei die Analogsignal-Ausgabevorrichtung (200) Teil eines übergeordneten Steuerungs- oder Automatisierungssystems (100) ist, über welches die Parametrierungsdaten (110) vorgebbar sind,
**dadurch gekennzeichnet, dass**
die Analogsignal-Ausgabevorrichtung (200) universelle, analoge Strom- und Spannungsausgangsstufen und eine Vielzahl von Ausgabekanälen umfasst, mit wenigstens einem Ausgangstreiber (263) zum jeweiligen Einprägen von analogen Stromsignalen oder Spannungssignalen,
und **gekennzeichnet durch**
eine Einrichtung (210) zur intelligenten Parametrierungsüberwachung, eingerichtet, vor dem Einprägen eine Ausgabesignals eine intelligente Parametrierungsüberwachung durchzuführen, in deren Folge die Parametrierung nur einer maximal zulässigen Anzahl an Ausgangsstufen zur Bereitstellung von Stromausgabesignalen freigegeben wird, wobei andere Kanäle gegebenenfalls noch als Spannungsausgang betrieben werden können, wobei, wenn basierend auf den Parametrierungsdaten (110) der Verlustleistungs-Grenzwert (Pvmax) nicht eingehalten wird, die Einrichtung zur intelligenten Parametrierungsüberwachung die Freigabe des analogen Ausgabekanals (265-1, 265-n) unterbindet und eine entsprechende Fehlermeldung generiert, dass der maximal zulässige Verlustleistungs-Grenzwert (Pvmax) überschritten wird und weitere Kanäle nur noch im Spannungsausgabemodus parametriert werden können.

6. Analogsignal-Ausgabevorrichtung (200) nach vorstehendem Anspruch, wobei am Ausgabekanal (265-1, 265-n) eingeprägte Strom- und/oder Spannungssignale parametrierbar sind.

7. Analogsignal-Ausgabevorrichtung (200) nach einem der vorstehenden Ansprüche 5 bis 6, wobei die Überwachungseinrichtung ferner angepasst ist, bei einem Unterbinden des Einprägens eines Stromsignals das Einprägen eines auf anderen Parametrierungsdaten (110) basierenden Signals freizugeben.

8. Analogsignal-Ausgabevorrichtung (200) nach einem der vorstehenden Ansprüche 5 bis 7, wobei die Überwachungseinrichtung ferner angepasst ist, in funktioneller Abhängigkeit des Vergleichsergebnisses ein Freigabesignal (215) zum entsprechenden Einprägen zu generieren.

9. Analogsignal-Ausgabevorrichtung (200) nach einem der vorstehenden Ansprüche 5 bis 8, ferner umfassend eine Freigabeeinheit, die angepasst ist, die Freigabe zur Einprägung eines Signals in Abhängigkeit eines ersten Freigabesignals (215) von dem Steuer- und/oder Automatisierungssystem zum Bewirken eines einer Parametrierungsvorgabe entsprechend einzuprägenden Signals und eines zweiten Freigabesignals (120) von der Überwachungseinrichtung zu bewirken.

10. Analogsignal-Ausgabevorrichtung (200) nach einem der vorstehenden Ansprüche 5 bis 9, welche ein separates Analogausgabegerät mit lokaler Intelligenz ist, eine Kombination von intelligenter Steuerung mit angekoppelter Analogausgabebaugruppe oder eine multifunktionale E/A-Baugruppe zum Empfangen von analogen Strom- und/oder Spannungssignalen und zum Ausgeben von analogen Stromsignalen und Spannungssignalen ist.

## Claims

1. A method for monitoring a parameterisable output driver (263) of an analogue signal output device (200), which is suitable for driving actuators in industrial automation technology, when impressing analogue signals on an output channel (265-1, 265-n), comprising the steps of:
determining a resulting internal power loss (Pvges) based on the parameterization data predefined for the parameterization of the output driver (263);
comparing the internal power loss (Pvges) against a power loss limit value (Pvmax) of the analogue signal output device; and
in functional dependency on the comparison result, inhibiting an impression of an analogue signal on the output channel (265-1, 265-n) corresponding to the parameterization data (110) predefined for the parameterization of the output driver (263);
wherein the analogue signal output device (200) is part of a higher-level control or automation system (100), via which the parameterization data (110) can be predefined;
**characterized in that**
the analogue signal output device (200) comprises universal analogue current and voltage output stages and a multiplicity of output channels, with at least one output driver (263) for respectively impressing analogue current signals or voltage signals;
prior to impressing an output signal, an intelligent parameterization monitoring is carried out, as a result of which the parameterization of only a maximum permissible number of output stages is enabled for providing current output signals, while other channels can optionally still be operated as a voltage output;
wherein, if based on the parameterization data (110) the power loss limit value (Pvmax) is not met, the intelligent parameterization monitoring inhibits the enabling of the analogue output channel (265-1, 265-n) and generates a corresponding error message that the maximum permissible power loss limit value (Pvmax) is exceeded and further channels can only be parameterized in the voltage output mode.

2. The method according to any one of the preceding claims, wherein in the case of inhibition, the impressing of a signal based on different parameterization data (110) is enabled.

3. The method according to any one of the preceding claims, wherein in functional dependency on the comparison result, an enable signal (215) for corresponding impression is generated.

4. The method according to the preceding claim, wherein, for enabling the impression, the enable signal (215) is combined with a second enable signal (120) which is received from the control and/or automation system (100) providing the parameterization data (110) for causing a signal to be impressed.

5. An analogue signal output device (200), suitable for driving actuators in industrial automation technology, in particular for carrying out a method according to any one of the preceding claims, comprising
at least one output driver (263) that can be parameterised for impressing analogue signals on an output channel (265-1, 265-n); and
a monitoring device adapted for determining a resulting internal power loss (Pvges) based on the parameterization data (110) predefined for parameterizing the output driver (263) and comparing it against a power loss limit value (Pvmax) of the analogue signal output device (200), and for inhibiting the respective impression of an analogue signal on the output channel (265-1, 265-n) as based on the parameterization data (110) in functional dependency on the comparison result;
wherein the analogue signal output device (200) is part of a higher-level control or automation system (100), via which the parameterization data (110) can be predefined;
**characterized in that**
the analogue signal output device (200) comprises universal analogue current and voltage output stages and a multiplicity of output channels, with at least one output driver (263) for respectively impressing analogue current signals or voltage signals;
and **characterized by**
a device (210) for intelligent parameterization monitoring, configured to carry out an intelligent parameterization monitoring prior to the impression of an output signal, as a result of which the parameterization of only a maximum permissible number of output stages is enabled for providing current output signals, while other channels can optionally still be operated as a voltage output;
wherein, if based on the parameterization data (110) the power loss limit value (Pvmax) is not met, the device for intelligent parameterization monitoring inhibits the enabling of the analogue output channel (265-1, 265-n) and generates a corresponding error message that the maximum permissible power loss limit value (Pvmax) is exceeded and further channels can only be parameterized in the voltage output mode.

6. The analogue signal output device (200) according to the preceding claim, wherein current and/or voltage signals impressed on the output channel (265-1, 265-n) can be parameterised.

7. The analogue signal output device (200) according to any one of the preceding claims 5 to 6, wherein the monitoring device is further adapted, in the case of inhibition of the impression of a current signal, to enable the impression of a signal based on different parameterization data (110).

8. The analogue signal output device (200) according to any one of the preceding claims 5 to 7, wherein the monitoring device is further adapted to generate an enable signal (215) for corresponding impression in functional dependency on the comparison result.

9. The analogue signal output device (200) according to any one of the preceding claims 5 to 8, further comprising an enabling unit which is adapted to cause enabling for impressing a signal in response to a first enable signal (215) from the control and/or automation system, for causing a signal to be impressed according to a predefined parameterization and a second enable signal (120) from the monitoring device.

10. The analogue signal output device (200) according to any one of the preceding claims 5 to 9, constituting one of a separate analogue output device with local intelligence, a combination of intelligent controller analogue output module coupled thereto, and a multifunctional I/O module for receiving analogue current and/or voltage signals and for outputting analogue current signals and voltage signals.

## Revendications

1. Procédé de surveillance d'un pilote de sortie (263) paramétrable d'un dispositif d'émission de signal analogique (200), lequel pilote est approprié à commander des actionneurs dans la technique d'automatisation industrielle, lors de l'application de signaux analogiques à un canal de sortie (265-1, 265-n), comprenant les étapes suivantes :
la détermination d'une dissipation de puissance interne (Pvges) résultante, sur la base de données de paramétrage (110) prédéfinies pour le paramétrage du pilote de sortie (263),
la comparaison de la dissipation de puissance interne (Pvges) à une valeur limite de dissipation de puissance (Pvmax) du dispositif d'émission de signal analogique (200), et, en fonction du résultat de la comparaison, l'interruption d'une application, correspondant aux données de paramétrage (110) prédéfinies pour le paramétrage du pilote de sortie (263), d'un signal analogique au canal de sortie (265-1, 265-n),
dans lequel le dispositif d'émission de signal analogique (200) fait partie d'un système de commande ou d'automatisation (100) supérieur, par l'intermédiaire duquel les données de paramétrage (110) peuvent être prédéfinies,
**caractérisé en ce que** :
le dispositif d'émission de signal analogique (200) comporte des étages de sortie de tension et de courant analogiques universels et une pluralité de canaux de sortie, comprenant au moins un pilote de sortie (263) pour l'application respective de signaux analogiques de courant ou de signaux analogiques de tension,
avant l'application d'un signal de sortie, une surveillance intelligente du paramétrage est mise en oeuvre, à la suite de laquelle le paramétrage uniquement d'un nombre maximal admissible d'étages de sortie est libéré pour la fourniture de signaux de sortie de courant, d'autres canaux pouvant le cas échéant encore fonctionner en tant que sortie de tension, la surveillance intelligente du paramétrage, lorsque la valeur limite de dissipation de puissance (Pvmax) n'est pas respectée sur la base des données de paramétrage (110), interrompant la libération du canal de sortie analogique (265-1, 265-n) et générant un message d'erreur correspondant, indiquant que la valeur limite de dissipation de puissance (Pvmax) maximale admissible est dépassée et que d'autres canaux ne peuvent plus être paramétrés que dans le mode sortie de tension.

2. Procédé selon l'une quelconque des revendications précédentes, dans lequel l'application d'un signal se basant sur d'autres données de paramétrage (110) est libérée lors de l'interruption.

3. Procédé selon l'une quelconque des revendications précédentes, dans lequel un signal de libération (215) pour l'application correspondante est généré en fonction du résultat de la comparaison.

4. Procédé selon la revendication précédente, dans lequel le signal de libération (215) est combiné à un deuxième signal de libération (120), lequel, pour produire un signal à appliquer, est reçu par le système de commande et/ou d'automatisation (100) prédéfinissant les données de paramétrage (110), pour libérer l'application.

5. Dispositif d'émission de signal analogique (200) approprié à commander des actionneurs dans la technique d'automatisation industrielle, en particulier pour la mise en oeuvre d'un procédé selon l'une quelconque des revendications précédentes, comprenant au moins un pilote de sortie (263), qui peut être paramétré pour appliquer des signaux analogiques à un canal d'émission (265-1, 265-n), et un dispositif de surveillance adapté, sur la base de données de paramétrage (110) prédéfinies pour le paramétrage du pilote de sortie (263), pour déterminer une dissipation de puissance interne (Pvges) résultante et pour la comparer à une valeur limite de dissipation de puissance (Pvmax) du dispositif d'émission de signal analogique (200), ainsi que l'application correspondante, sur la base des données de paramétrage (110), d'un signal analogique au canal de sortie (265-1, 265-n) en fonction du résultat de la comparaison,
le dispositif d'émission de signal analogique (200) faisant partie d'un système de commande ou d'automatisation (100) supérieur, par l'intermédiaire duquel les données de paramétrage (110) peuvent être prédéfinies,
le dispositif d'émission de signal analogique (200) étant **caractérisé en ce qu'**il comporte des étages de sortie de tension et de courant analogiques universels et une pluralité de canaux de sortie, comprenant au moins un pilote de sortie (263) pour l'application respective de signaux analogiques de courant ou de signaux analogiques de tension,
et **caractérisé par**
un dispositif (210) de surveillance intelligente du paramétrage, conçu, avant l'application d'un signal de sortie, pour mettre en oeuvre une surveillance intelligente du paramétrage, à la suite de laquelle le paramétrage uniquement d'un nombre maximal admissible d'étages de sortie est libéré pour la fourniture de signaux de sortie de courant, d'autres canaux pouvant le cas échéant encore fonctionner en tant que sortie de tension, le dispositif de surveillance intelligente du paramétrage, lorsque la valeur limite de dissipation de puissance (Pvmax) n'est pas respectée sur la base des données de paramétrage (110), interrompant la libération du canal de sortie analogique (265-1, 265-n) et générant un message d'erreur correspondant, indiquant que la valeur limite de dissipation de puissance (Pvmax) maximale admissible est dépassée et que d'autres canaux ne peuvent plus être paramétrés que dans le mode sortie de tension.

6. Dispositif d'émission de signal analogique (200) selon la revendication précédente, dans lequel les signaux de courant et/ou de tension appliqués au canal de sortie (265-1, 265-n) peuvent être paramétrés.

7. Dispositif d'émission de signal analogique (200) selon l'une quelconque des revendications précédentes 5 et 6, dans lequel le dispositif de surveillance est en outre adapté, lors d'une interruption d'une application d'un signal de courant, pour libérer l'application d'un signal se basant sur d'autres données de paramétrage (110).

8. Dispositif d'émission de signal analogique (200) selon l'une quelconque des revendications précédentes 5 à 7, dans lequel le dispositif de surveillance est en outre adapté pour générer un signal de libération (215) pour une application correspondante en fonction du résultat de la comparaison.

9. Dispositif d'émission de signal analogique (200) selon l'une quelconque des revendications précédentes 5 à 8, comportant en outre une unité de libération, qui est adaptée pour entraîner la libération pour l'application d'un signal en fonction d'un premier signal de libération (215) par le système de commande et d'automatisation pour produire un signal à appliquer conformément à une prescription de paramétrage et un deuxième signal de libération (120) par le dispositif de surveillance.

10. Dispositif d'émission de signal analogique (200) selon l'une quelconque des revendications 5 à 9, lequel est un appareil de sortie analogique séparé pourvu d'une intelligence locale, une combinaison d'une commande intelligente à laquelle est couplé un module de sortie analogique ou un module E/S multifonctionnel pour la réception de signaux de courant et/ou de tension analogiques et pour l'émission de signaux analogiques de courant et de tension.
